**Europäisches Patentamt**

**European Patent Office**

**Office européen des brevets**

(19)

(11) Publication number : **0 491 022 B1**

# (12) EUROPEAN PATENT SPECIFICATION

(45) Date of publication of patent specification :
**02.03.94 Bulletin 94/09**

(51) Int. Cl.5 : **B01J 20/32**

(21) Application number : **91912467.7**

(22) Date of filing : **03.07.91**

(86) International application number :
**PCT/GB91/01080**

(87) International publication number :
**WO 92/00806 23.01.92 Gazette 92/03**

(54) **CHEMICAL REACTIONS USING MICROWAVE TECHNOLOGY.**

(30) Priority : **06.07.90 GB 9014942**

(43) Date of publication of application :
**24.06.92 Bulletin 92/26**

(45) Publication of the grant of the patent :
**02.03.94 Bulletin 94/09**

(84) Designated Contracting States :
**AT BE CH DE DK ES FR GB GR IT LI NL SE**

(56) References cited :
**EP-A- 0 106 769**
**DE-A- 3 900 272**
**US-A- 4 045 353**
**US-A- 4 280 923**

(56) References cited :
**Chemical Abstracs, vol. 91, no. 6, August 6, 1979, Columbus, Ohio, US; abstract no. 40674A, Gilman: "Modification of porous polymeric sorbents", page 49**
**Journ. of Chrom. Sci. 14, 316-320 (1976)**
**Adv. in Chrom. 21,41 (1983) p.51-53**

(73) Proprietor : **JOSEPH CROSFIELD & SONS**
**Bank Quay**
**Warrington WA5 1AB (GB)**

(72) Inventor : **LAAN, Joannes, Arie, Maria**
**Ukkelstraat 10**
**NL-4826 PN Breda (NL)**
Inventor : **LAANE, Nicolaas, Charles, Marie**
**Juliana Lane 28**
**NL-NH Naarden (NL)**

(74) Representative : **Roscoe, Brian Corrie et al**
**UNILEVER PLC Patents Division Colworth**
**House Sharnbrook**
**Bedford MK44 1LQ (GB)**

## Description

### FIELD OF THE INVENTION

The invention relates to the chemical modification of inorganic materials using microwave technology as a source of energy and, more particularly, to a novel process for the preparation of silica and hydrotalcite based chromatographic materials.

### BACKGROUND OF THE INVENTION

In general, inorganic materials carrying hydroxyl groups, are functionalised by:

i) The inorganic support material is treated with one or more reagents to yield a chemical modified support material, which can be used as such, or can be functionalised further to tailor its properties to the desired specifications, or

ii) The inorganic support material is treated with one or more compounds to yield a physically modified support material, which can be used as such, or can be functionalised further to tailor its properties.

Typically, organosilanes have been heretofore used to couple various organic moieties to the surface of inorganic materials, or preformed organic polymers have been absorbed onto the surface of the inorganic support, and subsequently cross-linked to form a pellicle, or skin, on the surface. Alternatively, monomeric species were polymerised onto unmodified inorganic supports, for example silica.

In general, modification reactions were performed in the presence of excess amounts of (in) organic solvents, and in many cases conventional heating sources are applied to induce the chemical reactions. An example is refluxing.

Journal of Chromatographic science, 14 (1976) pages 316 - 320 discloses glycerolpropylsilane bonded on controlled porosity glass (CPG), the process for its obtention and its use in the steric exclusion chromatography of biological macromolecules.

### GENERAL DESCRIPTION OF THE INVENTION

A general method is provided which allows the rapid formation of chemically modified inorganic materials based on silica or hydrotalcite-like materials, or material having exposed hydroxyl groups, using microwaves as an effective source of energy. One utility of these modified materials is in chromatography.

An inorganic support matrix is formed under dry conditions by bonding an organosilane to an inorganic surface using microwaves as a source of energy, which can be functionalised further by microwave-induced chemistry or conventional chemistry known in the field to various types of chromatographic supports, such as polyethyleneimine, or IMAC (Immobilised-Metal-Affinity-Chromatography) based materials.

The reactive organo-silane may be selected from a number of classes dependent on the chemistry of the chromatographic surface desired. Thus epoxy-silanes, e.g. gamma-glycidyloxypropyltrimethoxy silane; amino-silanes, e.g. gamma-amino propyltrimethoxysilane, gamma-(2-aminoethylamino) propyltrimethoxysilane; halogenated silanes, e.g. (gamma-chloropropyl) trimethoxy silane; imidazoline silanes, e.g. gamma-(2-imidazolin-1-yl) propyltriethoxy silane; mercaptan-silanes, e.g. gamma-mercaptopropyltrimethoxy silane; and vinyl silanes, e.g. vinyltri(m)ethoxy silane and vinyl-tris (2-methoxyethoxy) silane.

The substrate having exposed hydroxyl groups is preferably silica or hydrotalcite-like materials but other hydroxyl containing materials, are usable.

One hydroxyl carrying material is a hydrotalcite-like material, such term includes the calcined material.

Thus, the present invention utilises materials related to a compound of the formula $Mg_6Al_2(OH)_{16}CO_3.4H_2O$ known as hydrotalcite, and for convenience referred to hereinafter as hydrotalcite-like materials.

The hydrotalcite-like materials useful the present invention can be described by formula I below:

$$M_{k+m} N_{n+p} (OH)_2 A_z{}^{y-} x.H_2O$$

where:

M is any 1+ or 2+ cation or combination thereof

N is any 3+ or 4+ cation or combination thereof

k is the sum of the individual mole fractions of the 1+ cations

m is the sum of the individual mole fractions of the 2+ cations

n is the sum of the individual mole fractions of the 3+ cations

p is the sum of the individual mole fractions of the 4+ cations where either but not both of k and m or n and p can be zero and k+m+n+p=1.

$A_z{}^{y-}$ is any anion of charge y- and mole fraction z, or combination of anions of similar or differing y- and k+2m+3n+4p-2-zy=0 and x can range from 1 to 100.

Examples of the cations M in the above formula are $Li^+$, $Mg^{2+}$, $Zn^{2+}$, $Fe^{2+}$, $Cu^{2+}$, $Sn^{2+}$, $Ca^{2+}$ and $Sr^{2+}$. Suitable N cations include $Al^{3+}$, $Fe^{3+}$, $Ti^{4+}$ and $Sn^{4+}$.

Preferred divalent cations are $Zn^{2+}$, $Cu^{2+}$ or $Mg^{2+}$ or a combination of these ions, or a combination with other divalent cations.

The anion A may be an inorganic or organic anion. Preferred inorganic anions A are $Cl^-$, $NO_3^-$, $SO_4^{2-}$, $CO_3^{2-}$ and $OH^-$. Examples of organic anions are carboxylate ions such as citrate and stearate.

Examples of hydrotalcite-like materials of this invention are:-

$$Zn_{16} Al_2 (OH)_{36} (Cl_2) \, xH_2O$$
$$Mg_6 Al_2 (OH)_{16} (NO_3)_2 \, xH_2O$$
$$Cu_{16} Al_2 (OH)_{36} (Cl_2) \, xH_2O$$

Preparation of hydrotalcite-like compounds is known and has been described in a number of publications including Solid State Ionics 22 (1986) pages 135-141 where there is published a paper by Walter T Reichle entitled "Synthesis of Anionic Clay Minerals (Mixed Metal Hydroxides, Hydrotalcite)" and Chemtech (January 1986) pages 58-63 where there is published a paper by Walter T Reichle entitled "Anionic Clay Minerals".

A zinc/aluminium hydrotalcite-like material useful in the present invention may be prepared in one of the following ways or in other ways known in the art:

1. A 1 mol $dm^{-3}$ solution of an 8:1 molar ratio of zinc chloride and aluminium chloride was prepared. To this a 2 mol $dm^{-3}$ solution of sodium hydroxide was added until the original pH of the chloride solution had been increased from around 3 to pH 6.75. This resulted in the formation of a white gel-like precipitate which was separated by centrifuging. The precipitate was then washed by suspension in demineralised water followed by centrifuging. This washing process was repeated several times. The gel was then dried at 80°C to 100°C and ground to a fine powder.

2. A 1 mol $dm^{-3}$ solution of an 8:1 molar ratio of zinc chloride and aluminium chloride was prepared and simultaneously pumped into a 5 litre beaker, fitted with a stirrer, along with a 5 mol $dm^{-3}$ solution of sodium hydroxide. The rate of addition of sodium hydroxide was varied to maintain a pH of 6.5 in the reaction mixture. The resulting gel was separated and washed as described above. Particles of the washed precipitate were then dried in different ways:-

a) spray dried;

b) slurried in alcohol, filtered and oven dried at 50°C. The resulting precipitate was then hammer milled to form a fine powder;

c) slurried in nonionic surfactant (Synperonic A7 ex ICI) filtered and oven dried at 50°C. The resulting precipitate was then hammer milled to form a fine powder.

A magnesium/aluminium hydrotalcite-like material useful in the present invention may be prepared in the following way or in other ways known in the art.

To 98 litres of water 19.5 kg of sodium hydroxide was added followed by 25kg of magnesium nitrate and 18.3kg of aluminium nitrate dissolved in 73 litres of water to give a Mg:Al ratio of 3:1. The nitrate solution was added over a period of 30 minutes with stirring. The solution was heated at 90°C to 100°C for 2 hours. The resulting precipitate was filtered and washed. The precipitate was treated as follows:-

(i) a sample was resuspended in water to give a 10% solids slurry;

(ii) a sample was spray dried; and

(iii) a sample was oven dried at approximately 120°C and micronised using a fluid energy mill.

It has been found that the morphology of hydrotalcite-like materials is dependent on their method of preparation. Especially preferred are methods of preparation which give rise to porous materials such as spray drying.

The silicas used in the present invention are obtainable through the preparative methods well characterised in the literature. Thus the gel, precipitate and fume routes all provide suitable silicas.

The reactions are believed to proceed with the aid of the following mechanisms.

Inorganic oxides do not absorb microwaves at 2450 MHz and so are not an obstacle for the transmission of microwaves. In "dry" reactions, hydroxyl groups, water and maybe the organic compounds themselves present on the surface of these inorganic materials strongly absorb microwaves, and hence these species are activated by microwaves. Under these circumstances the inorganic material acts as a microenvironmental template for reactions to proceed.

In this invention the inorganic material not only acts as a substrate but also as a reactant viz. the material is chemically modified during the process. The dry conditions are such that the risk of explosions is negligible.

The use of microwave energy will usually allow reuse of the solvent medium containing unreacted ligand, this provides a more economic method of utilising the ligand chemicals.

The method of the invention requires less solvent than the known reflux method. There must be sufficient solvent present when refluxing to give efficient operation of the apparatus while the method of the invention requires the solvent only for distribution of the ligand over the hydroxyl containing substrate.

The use of microwave energy allows a more rapid reaction cycle to be achieved when compared with conventional means of heating the reactants.

The process is based on the understanding that microwave energy provides an efficient energy source for chemical reactions preparing modified materials having exposed hydroxyl groups, e.g. silicas and hydrotalcites, for use in chromatography. The hydroxyl groups on a silica surface are also termed silanol groups.

The products of the invention are usable, as examples, in standard chromatographic preparative and separation procedures, as cosmetic ingredients, slow-release agents and catalyst support materials.

## SPECIFIC DESCRIPTION OF THE INVENTION

The following process steps will be followed:

i) An (in)organic solvent (typically water, methanol or ether), a ligand (typically, gamma-glycidoxypropyl trimethoxysilane or amino propyl triethoxy silane), and the inorganic material are mixed to obtain an even distribution of ligand over the surface of the support material,

ii) excess solvent is then removed by evaporation, or filtration,

iii) the semi-dry, solid inorganic material ligand mixture is then irradiated in a microwave system (typically, a commercially available microwave oven) for a few minutes at a certain energy (typically, 2-10 minutes at 400 Watt),

iv) the irradiated material is then washed extensively with solvents (typically with ether, methanol, water and acetone, and dried under vacuo or in air, and, optionally,

v) further functionalisation to yield polyethyleneimine or IMAC-based materials is achieved by reaction which may be caused by microwave energy.

## EXAMPLE 1 : Preparation of epoxy-silica via evaporation

10g of silica (Sorbsil C500-40/60; pore size 500A (50nm) particle size 40 to 60 $\mu$m obtainable from Crosfield Chemicals of Warrington England), 1.5 ml of gamma-glycidoxypropyl trimethoxysilane, and 65 ml of methanol were mixed with stirring at room temperature for 10 minutes. Excess solvent was removed by evaporation. The "dry" material was then irradiated in a microwave oven for 5 minutes at 400 Watt. The material was then washed sequentially with 200 ml methanol, 200 ml acetone, and finally with 100 ml ether. The product was dried in air.

The results are given in Table I. Ether used as a solvent gives similar results.

## EXAMPLE 2 : Preparation of epoxy-silica

Example 1 was repeated, except that water was used as the solvent and was removed by filtration.

## EXAMPLE 3 : (comparative)

The epoxy silane product of Examples 1 & 2 was prepared using the conventional procedure of refluxing under solvent. 100 grams of toluene and water per 10g of silica were used in parallel reflux experiments with the reactants being refluxed for 120 minutes.

## Table I

| Example | time (mins) | epoxy | diol | % epoxy |
|---------|------|-------|------|---------|
| | | Content (micromol $g^{-1}$) | | |
| 1 | 5 | 315 | 0 | 100 |
| 2 | 5 | 295 | 15 | 95.2 |
| 3 toluene | 120 | 300 | 0 | 100 |
| 3 water | 120 | 150 | 250 | 37.5 |

These results demonstrate the process of the invention provides an improvement in the epoxy/diol ratio when water is used as the solvent.

EXAMPLE 4 : preparation of expoxy-hydrotalcite

Example 2 was repeated using 10g hydrotalcite (Mg:Al of 6:2, pore volume 1.2 cm³/g) as the hydroxyl carrying material and the irradiation time was varied between 0 and 10 minutes. Unreacted hydrotalcite contained 2.5% carbon. After 5 and 10 minutes irradiation 3.3% and 4.2% carbon was measured respectively. The epoxy content was above 90% as indicated by known analytical methods.

EXAMPLE 5

The coupling of an aminosilane was demonstrated by mixing silica (10g of Sorbsil C500 - 40/60), water (65 ml) and gamma-aminopropyl triethoxy silane (1.5 ml); the mixture was filtered. At the times given in Table II aliquots were taken from the semidry silica and washed as described in Example 1; this provides a blank measurement. Other aliquots were subjected to 5 mins microwave (400 watts) treatment after the times shown and prior to washing.

The resultant silanated silicas were analysed for carbon and nitrogen and the results shown in Table II.

## Table II

| | Time(mins) | C% w/w | N% w/w |
|---|---|---|---|
| Blank | 0 | 0.55 | 0.20 |
| Product | 30 | 0.91 | 0.28 |
| | 90 | 1.33 | 0.47 |
| Microwave | 0 | 1.58 | 0.51 |
| Product | 30 | 2.47 | 0.78 |
| | 90 | 2.76 | 0.90 |

These results demonstrate the silanating effect achieved with the aid of microwave energy. Use of a conventional relux method with water or solvent to prepare this product gave carbon and nitrogen contents of 2.7% w/w and 0.9% w/w respectively. Thus the use of microwave energy provides a product comparable to a reflux product but with a shorter reaction time.

EXAMPLE 6 : (comparative)

The silica-water ligand mixture of Example 1, when heated for 5 minutes on an oil bath, gave only 50 micromol epoxy and 5 micromol diol per gram silica after filtration and washing. Similar results were obtained when the silica-ligand mixture after filtration was heated on an oil bath for 5 minutes. This is low compared with the 295 micromoles epoxy and 15 micromoles diol per gram silica achieved in Example I using microwave irradiation for 5 minutes.

Similar effects were found using the amino silane of example 5 as ligand.

## Claims

1. A process for preparing chemically functionalised inorganic material wherein a substrate having exposed hydroxyl groups is reacted under dry conditions with a ligand by irradiating them with microwave energy while in reactive contact.

2. A process according to claim 1 wherein the substrate is silica based or a hydrotalcite-like material.

## Patentansprüche

1. Verfahren zur Herstellung eines chemisch funktionalisierten anorganischen Materials, wobei ein Substrat mit exponierten Hydroxylgruppen unter trockenen Bedingungen mit einem Liganden zur Reaktion gebracht wird, indem sie, bei andauerndem Reaktionskontakt, mit Mikrowellenenergie bestrahlt werden.

2. Verfahren nach Anspruch 1, dadurch gekennzeichnet, daß das Substrat auf Siliziumdioxid basiert oder ein hydrotalcitähnliches Material ist.

## Revendications

1. Procédé de préparation d'une matière minérale chimiquement fonctionnalisée selon lequel on fait réagir un substrat portant des groupes hydroxyle exposés dans des conditions sèches avec un ligand en les irradiant avec de l'énergie de micro-ondes pendant qu'ils sont en contact réactif.

2. Procédé selon la revendication 1, dans lequel le substrat est une matière à base de silice ou analogue à l'hydrotalcite.